# EUROPEAN PATENT APPLICATION

(11) **EP 3 327 822 A1**
(43) Date of publication of application: **30.05.2018**
(21) Application number: 16201021.9
(22) Date of filing: 29.11.2016
(51) Int. Cl.: H01M 2/16, H01M 10/052, H01M 10/0587, H01M 10/42

(54) **BATTERY CELL**

(71) Applicant: Lithium Energy and Power GmbH & Co. KG, 70469 Stuttgart (DE)
(72) Inventor: Wurm, Calin Iulius, 86405 Meitingen (DE); Hiller, Martin Manuel, 70469 Stuttgart (DE); Fuchs, Franz, 70191 Stuttgart (DE)
(74) Representative: Bee, Joachim

(57) **Abstract**

The invention concerns a battery cell, comprising at least one electrode assembly (10), the electrode assembly (10) containing an anode (11) and a cathode (12) that are divided from one another by means of a separator (18). The separator (18) contains an ion conductive base layer (30) and an electrically conductive additional layer (32), and the additional layer (32) is coated with a coating (34) made of a polymer material, wherein the coating (34) has a melting point between 85 °C and 130 °C and its melting can be externally trigged.

## Description

The invention relates to a battery cell comprising at least one electrode assembly. This electrode assembly contains an anode and a cathode which are separated from one another by means of a separator. The separator contains an ion conductive base layer and a porous electrically and thermally conductive additional layer.

### State of the Art

Electrical energy can be stored by means of batteries. Batteries convert chemical energy into electrical energy. Particularly, rechargeable batteries are known to be able to be charged and discharged several times. Batteries or battery systems comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes and the separator are impregnated by an electrolyte that is normally in liquid state or in solid state. The electrodes of the electrode assemblies are connected to the terminals of the battery cell. The battery cell can be charged and discharged via the terminals.

Both, the cathode and the anode, comprise a current collector on which an active material is applied. The current collector of the cathode is typically made of aluminium and the current collector of the anode is typically made of copper. The active material for the cathode is, for example, a metal oxide. The active material for the anode is, for example, graphite or silicon. In the active material of the anode lithium atoms are intercalated.

In a discharge process, electrons flow in an external circuit from the anode to the cathode, and lithium ions move within the battery cell from the anode to the cathode. In a charging process of the battery cell, the lithium ions move from the cathode to the anode. Thereby, the lithium ions are stored back into the active material of the anode reversibly.

If the battery cell is brought outside normal conditions, in particular too high temperature, too low temperature, short circuit, overcharge or deep discharge, the inner temperature of the battery cell can excessively rise. If the temperature in the battery cell is sufficiently high, a thermal runaway may occur, which may destroy the battery cell.

Document WO2013/009750 A2 discloses a separator for battery cells which contains several layers. Said layers include for example metallic layers and layers made of Polyethylene.

Also document WO2013/154623 A1 discloses a separator for battery cells which contains several layers. In particular, the separator comprises two metallic layers with a layer made of Polyethylene arranged in between.

Document DE 10 2013 218 681 A1 discloses a battery cell with a separator layer and a method for controlling said battery cell. Containers are provided filled with a chemical substance. When a critical state is reached, in particular by overheat of the battery cell, said containers melt and release the substance. Said chemical substance will react with the free lithium ions preventing a further transport of lithium ions.

Document DE 10 2009 022 678 A1 discloses an electrode assembly with a separator. The separator is formed as a composite material containing ceramic and polymer materials. In particular, the separator comprises a base layer formed of an organic material coated with an inorganic material.

Document WO 2014/179725 A1 discloses a battery cell including a separator that includes at least one functional layer. The functional layer is in particular electrically conductive.

### Disclosure of the Invention

The invention refers to a battery cell, particularly a lithium ion battery cell, comprising at least one electrode assembly. The electrode assembly contains an anode and a cathode that are separated from one another by means of a separator. The separator contains an ion conductive base layer and an electrically conductive additional layer. Thereby, the base layer of the separator is electrically insulating, and the additional layer of the separator is also ion conductive. Therefore, the additional layer has pores that allow ions to pass through.

According to the invention, the additional layer is coated with a coating that is made of a polymer material, wherein the coating has a melting point between 85 °C and 130 °C. The coating is porous and hence ion conductive. This can be realized either by lamination of a porous film of the coating on the surface of the additional layer or by applying the polymer material of the coating mixed with a pore builder chemical (e.g. BDP- Dibutyl phthalate, PC-propylene carbonate) that will be later on extracted with a solvent (e.g. Cyclohexane) or by edge melting of polymer spheres onto the preheated surface of the additional layer.

In case of rising temperature within the battery cell, in particular within the electrode assembly, the coating is melting and blending over the additional layer.

Thereby, the coating is changing from porous to a compacted state and is furthermore plugging the pores within the additional layer. Hence, the ion conductivity of the additional layer and of the coating is lost. Thus, the separator lacks ion conductivity and ion flow within the electrode assembly is stopped. Hence, the battery cell is shut down. The pores of the base separator layer can also be closed via a similar mechanism at the same time or after melting of the coating layer.

According to an advantageous embodiment of the invention, the additional layer is made of porous metal or another electrically or thermally conductive material. In particular, the additional layer contains titanium. But other metals are also feasible, especially copper, platinum or aluminium.

According to another advantageous embodiment of the invention the additional layer is made of conductive carbon nanotubes, carbon nanofibers, amorphous carbons, graphite or a mix of said materials.

The additional layer is porous and is, for example, formed like a net which includes a plurality of meshes that resemble to pores and that allow ions to pass through.

According to a further development of the invention, the additional layer is arranged between the base layer of the separator and the anode as well as between the base layer of the separator and the coating.

The coating is applied to a far side of the additional layer in respect to the base layer. Hence, the additional layer is arranged between the base layer and the coating.

According to an advantageous embodiment of the invention, the polymer material of the coating is made of an alkane. Alternatively, the polymer material of the coating can also be made of other polymer materials, for example Linear Low-Density Polyethylene (LLDPE).

Advantageously, the alkane contains at least 40 carbon atoms per molecule. Thus, the alkane and hence the coating of the separator is in solid state by environmental temperature of 20 °C and has a melting point according to the invention between 85 °C and 130 °C.

According to a further development of the invention, the additional layer is connected to a heating source. Hence, when activating the heating source, the additional layer is heating. Hence, the heated additional layer is melting the coating. Thus, shutdown of the battery cell can be triggered by means of the heating source.

Advantageously, the heating source is a current source connected to the additional layer. Hence, when applying a current through the additional layer, the additional layer is heating appropriately. Thus, the heated additional layer is melting the coating and hence the battery cell is shut down as described above. The current needed for melting the coating can be taken from the neighbouring battery cells or from other modules of a power supply.

A battery cell according to the invention is usable advantageously in particular in an electric vehicle (EV), in a hybrid electric vehicle (HEV) or in a plug-in hybrid vehicle (PHEV), in a stationary battery or in a battery in a marine application.

### Advantages of the Invention

The invention allows the battery cell to be shut down in case of abnormal behaviour, e.g. internal short circuits, going outside the normal cycling or storage conditions. Hence, thermal runaway as well as destruction of the battery cell is prevented. In particular when the battery cell is connected to a heating or current source shutdown of the battery cell can be controlled and can be triggered intentionally when necessary.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell and
- Figure 2: a schematic view at an electrode assembly of the battery cell shown in figure 1.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

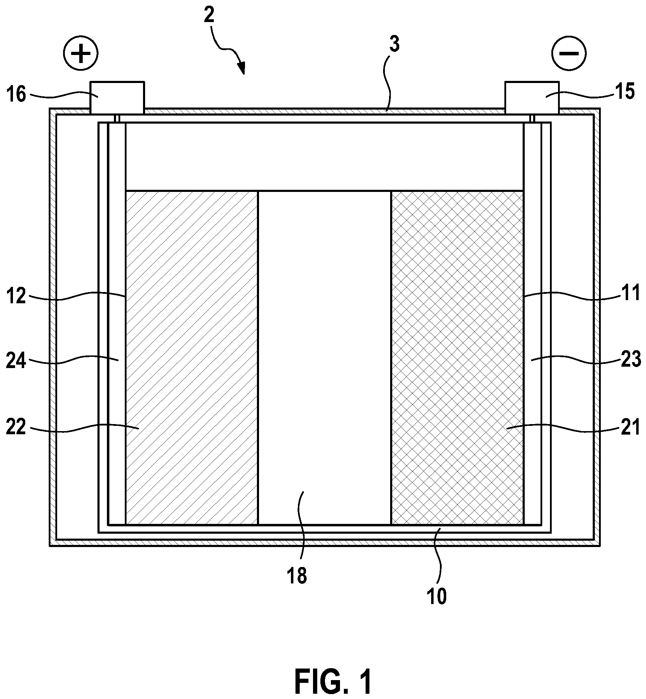

Figure 1 shows a schematic view at a battery cell 2. The battery cell 2 contains a housing 3 which has, for example, a prismatic or a cylindrical shape. The battery cell 2 further contains an electrode assembly 10, which is arranged within the housing 3.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

Presently, the electrode assembly 10 is shaped as a jelly roll. That means the anode 11 and the cathode 12 of the electrode assembly 10 are flat foils that are wound about an axis. The separator 18 that is also a flat foil is wound between the anode 11 and the cathode 12 about the same axis.

The housing 3 is filled with a liquid electrolyte such that the electrode assembly 10 is impregnated by the electrolyte. The separator 18, respectively parts of the separator 18, is soaked in said liquid electrolyte. The electrolyte is ion conductive.

The electrode assembly 10 can also be of pouch type, for example. That means the anode 11 and the cathode 12 of the electrode assembly 10 consist of several flat foils that are stacked alternately to form a pile or a stack. The separator 18 also consists of several flat foils that are stacked between the foils of the anode 11 and the foils of the cathode 12. A bag or a pouch made of an electrically insulating material surrounds the electrode assembly 10 such that the electrode assembly 10 is electrically insulated.

The anode 11 contains an anode active material 21 formed as a flat foil and an anode current collector 23 formed as a flat foil. The anode active material 21 and the anode current collector 23 are attached to one another. The anode current collector 23 is electrically conductive and is made of a metal, in particular of copper. The anode current collector 23 is electrically connected to the negative terminal 15 of the battery cell 2.

The cathode 12 contains a cathode active material 22 formed as a flat foil and a cathode current collector 24 formed as a flat foil. The cathode active material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

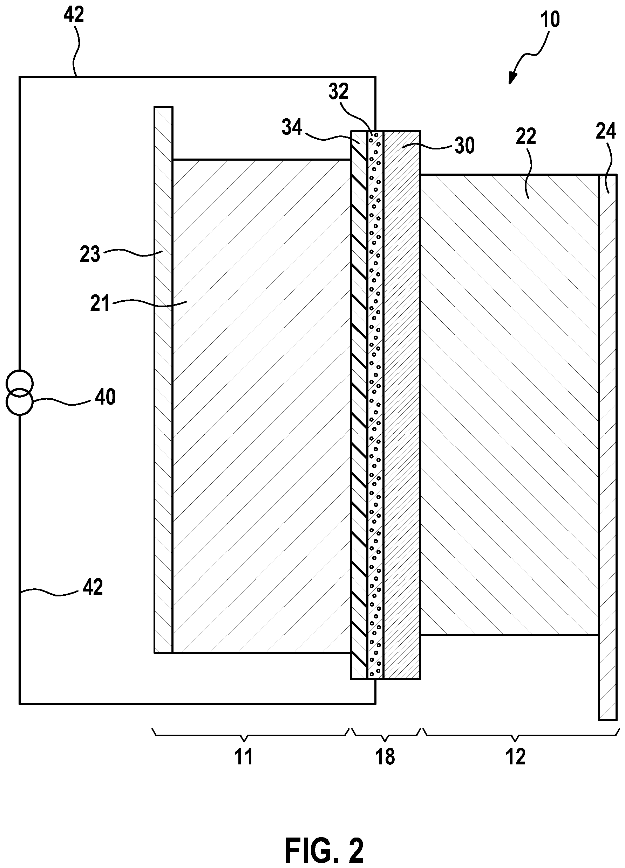

Figure 2 shows a schematic and detailed view at the electrode assembly 10 of the battery cell 2 shown in figure 1. As described above, the electrode assembly 10 is shaped as a jelly roll. Here, a schematic sectional view of the electrode assembly is given.

The separator 18 of the electrode assembly 10 contains a base layer 30, an additional layer 32 and a coating 34. The additional layer 32 is in direct contact to the base layer 30. The coating 34 is applied to a far side of the additional layer 32 in respect to the base layer 30. That means, the additional layer 32 is arranged between the base layer 30 and the coating 34.

The base layer 30 of the separator 18 is ion conductive and electrically insulating. The additional layer 32 of the separator 18 is ion conductive and electrically conductive. The additional layer 32 of the separator 18 is made of a metal, presently of copper. The additional layer 32 is porous and is presently formed like a net which includes meshes, respectively pores. Said pores allow ions to pass through.

The coating 34 of the separator 18 that the additional layer 32 is coated with, is made of an alkane. Said alkane comprises molecules which contain at least 40 carbon atoms. Hence, the coating 34 is made of a polymer material. The coating 34 has a melting point of presently 100 °C. Preferably, the melting point of the coating 34 is between 85 °C and 130 °C.

The coating 34 of the separator 18 is porous and hence, the coating 34 of the separator 18 is ion conductive. But, the coating 34 of the separator 18 is electrically insulating.

The separator 18 is arranged within the electrode assembly 10 such that the base layer 30 of the separator 18 is in direct contact with the cathode active material 22. The coating 34 on the additional layer 32 of the separator 18 is in direct contact with the anode active material 21. Thus, the additional layer 32 is arranged between the base layer 30 and the anode 11. Also the coating 34 is arranged between the base layer 30 and the anode 11.

A heating source 40 is supplied to the electrode assembly 10. The heating source 40 is provided in particular for heating the additional layer 32 of the separator 18. Therefore, the heating source 40 is in this embodiment directly connected to the additional layer 32 of the separator 18.

Presently, the heating source 40 is implemented as a current source. The current source is fed from other battery cells 2 that are arranged next to the battery cell 2 described here. The heating source 40 that is implemented as a current source is connected via wires 42 to different ends of the additional layer 32 of the separator 18.

If the battery cell 2 gets outside normal condition, in particular when a short circuit occurs, temperature within the battery cell 2, in particular within the electrode assembly 10, is rising. Such rise of temperature might lead to a safety hazard in a conventional battery, in particular to a thermal runaway as well as to a destruction of the battery.

Within the battery cell 2 according to the invention however, the coating 34 of the separator 18 is melting when temperature is rising. This happens, in dependence of the material of the coating 34, in a temperature area between 85 °C and 130°C. Thus, the former solid coating 34 is melting and is blending over the additional layer 32 of the separator 18.

Thereby, the coating 34 of the separator 18 is also changing from a porous state to a compacted state. Thereby, the coating 34 is plugging the pores within the additional layer 32 of the separator 18. Hence, the ion conductivity of the additional layer 32 and of the coating 34 is lost. Thus, the separator 18 lacks ion conductivity and ion flow within the electrode assembly 10 is stopped. Thus, current flow from the terminals 11, 12 of the battery cell 2 is also stopped. Hence, the battery cell 2 is shut down and the short circuit is interrupted. Hence, thermal runaway as well as destruction of the battery cell 2 are prevented.

As the additional layer 32 is connected to a heating source 40, shutdown of the battery cell 2 can be triggered externally by activating the heating source 40 intentionally. For this purpose, a control device that is not shown here supervises the state of the battery cell 2. In particular, the control device supervises the voltage between the terminals 11, 12, the current from the terminals 11, 12 and the temperature inside the housing 3 of the battery cell 2. The control device is connected to appropriate sensors.

When the control device detects abnormal conditions, in particular a rise of temperature or a current which is too high or a drop of voltage, the control device gives a signal to shut down the battery cell 2. Hence, the heating source 40 is activated. The heating source 40 then heats up the additional layer 32 of the separator 18. The heating source 40 which is in this embodiment a current source, then provides a current flow through the additional layer 32. Hence, the additional layer 32 is heating up.

When the additional layer 32 of the separator 18 is heated sufficiently, the coating 34 of the separator 18 is melting. Thus, ion conductivity of the separator 18 gets lost and the battery cell 2 is shut down as described above. Hence, thermal runaway as well as destruction, in particular explosion, of the battery cell 2 are prevented.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery cell (2), comprising at least one electrode assembly (10), the electrode assembly (10) containing an anode (11) and a cathode (12) that are divided from one another by means of a separator (18), the separator (18) containing an ion conductive base layer (30) and an electrically conductive additional layer (32),
**characterised in that**
the additional layer (32) is coated with a coating (34) made of a polymer material, wherein
the coating (34) has a melting point between 85 °C and 130 °C.

2. The battery cell (2) according to claim 1, **characterised in that** the additional layer (32) is made of conductive carbon nanotubes, carbon nanofibers, amorphous carbons, graphite or a mix of these materials.

3. The battery cell (2) according to claim 1, **characterised in that** the additional layer (32) is made of porous metal.

4. The battery cell (2) according to one of the preceding claims, **characterised in that** the additional layer (32) is arranged between the base layer (30) and the anode (11).

5. The battery cell (2) according to one of the preceding claims, **characterised in that** the coating (34) is applied to a far side of the additional layer (32) in respect to the base layer (30).

6. The battery cell (2) according to one of the preceding claims, **characterised in that** the polymer material of the coating (34) is made of an alkane.

7. The battery cell (2) according to claim 6, **characterised in that** the alkane contains at least 40 carbon atoms per molecule.

8. The battery cell (2) according to one of the preceding claims, **characterised in that** the additional layer (32) is connected to a heating source (40).

9. The battery cell (2) according to claim 8, **characterised in that** the heating source (40) is a current source connected to the additional layer (32).

10. Usage of a battery cell (2) according to one of the preceding claims, in an electric vehicle (EV), in a hybrid electric vehicle (HEV), in a plug-in hybrid vehicle (PHEV), in a stationary battery or in a battery in a marine application.
